# EUROPEAN PATENT APPLICATION

(11) **EP 4 632 536 A1**
(43) Date of publication of application: **15.10.2025**
(21) Application number: 24315162.8
(22) Date of filing: 12.04.2024
(51) Int. Cl.: G06F 3/01

(54) **REAL TIME AUGMENTED REALITY CAR SICKNESS MITIGATION**

(71) Applicant: Driving Simulation Association, 56100 Lorient (FR)
(72) Inventor: Kemeny, Andras, 56100 LORIENT (FR)
(74) Representative: Plasseraud IP

(57) **Abstract**

The invention relates to a method for reducing or suppressing motion sickness in a vehicle passenger, the method comprising:
obtaining (1001, 2001, 3002) real-time external environmental images of the vehicle (200);
tracking (1002, 2002, 3004) head movements of a passenger of the vehicle; and
streaming (1004, 2004, 3003) the real-time external environmental images to a head-mounted display device (100) worn by the passenger, wherein the streaming is adaptively aligned (1003, 2003, 3005) with the tracked head movements to maintain visual coherence with a perspective of the passenger

The invention further relates to a corresponding augmented reality display system and to a corresponding non transitory storage medium.

## Description

### Technical Field

This disclosure pertains to the field of vehicular passenger comfort and health.

More particularly, it relates to a method for reducing or suppressing motion sickness experienced by vehicle passengers, to an augmented reality system and to a non-transitory storage medium.

### Background Art

The problem of motion sickness by vehicle passengers, particularly by those who are not in control of the vehicle, like rear-seat occupants, is well-documented. Motion sickness, or kinetosis, arises due to conflicts between the vestibular and visual inputs when the perceived motion does not match the vestibular system's expectations. Traditional methods to mitigate this issue have been diverse but often limited in effectiveness or practicality.

Existing solutions have included eyewear with liquid-filled glasses to provide a horizontal visual reference, inertial information devices and generic display systems presenting vehicle-related visual content.

However, these solutions have shown limitations in addressing the full range of sensory conflicts, such as those arising from vehicle pitch or yaw movements. Moreover, existing methods fall short in seamlessly integrating the occupant's natural vision with the vehicle's movement. The horizontal visual reference offered by liquid-filled glasses is often perceived as intrusive, detracting from the overall comfort and experience. Additionally, the effectiveness of in-vehicle display systems in mitigating motion sickness is contingent on passengers actively looking towards these displays, which may not always be practical or natural during travel.

There is a need for methods and devices offering to passengers of a vehicle a visually coherent experience that aligns vestibular and visual inputs irrespective of gaze direction, thereby significantly reducing the perceptual conflicts that lead to motion sickness. This need is today strongly increased with the introduction of autonomous vehicles in the road traffic, where all vehicle occupants become passengers frequently.

### Summary

This disclosure improves significantly the situation.

A method for reducing or suppressing motion sickness experiences by vehicle passenger is proposed, the method comprising:
obtaining real-time external environmental images of the vehicle;
tracking head movements of a passenger of the vehicle; and
streaming the real-time external environmental images to a head-mounted display (HMD) device worn by the passenger, wherein the streaming is adaptively aligned with the tracked head movements to maintain visual coherence with a perspective of the passenger.

It is further proposed an augmented reality display system for reducing or suppressing motion sickness in a passenger of a vehicle, the augmented reality display system comprising:
a head-mounted display (HMD) or augmented reality eye wear (glasses) device;
a head movement tracking system configured to track the head movements of a passenger wearing the HMD device;
an environmental imaging system configured to obtain real-time external environmental images of the vehicle;
a streaming system for streaming the real-time external environmental images to the HMD device; and
an alignment module configured to adaptively align the streaming with the tracked head movements to maintain visual coherence with a perspective of the passenger.

The proposed technique directly addresses the sensory conflict between visual perception and vestibular sensation in passengers, a primary cause of motion sickness. By aligning the streamed external environmental images with the passenger's head movements, the proposed technique significantly diminishes the disconnect often experienced by vehicle passengers, thereby reducing motion sickness.

In an example, obtaining the real-time external environmental images includes capturing said images using a plurality of cameras mounted on the vehicle and capturing in real time the images of the external environment seen by vehicle occupants.

Employing a plurality of cameras enhances the comprehensiveness of the external environmental data captured. This broad coverage ensures that the AR display provides a realistic and continuous representation of the external environment, crucial for maintaining vestibular-visual coherence and minimizing motion sickness.

In an example, tracking the head movements comprises identifying markers placed within an interior of the vehicle and captured by a camera system integrated into the HMD device and/or the interior of the vehicle.

The utilization of markers within the vehicle's interior, combined with an integrated camera system, enables precise tracking of the passenger's head movements. This accuracy ensures that the AR display aligns seamlessly with the natural movements of the passenger's head, enhancing the effectiveness of the motion sickness reduction technique.

In an example, tracking the head movements comprises utilizing an inertial measurement unit (IMU) within the HMD device and/or an inertial measurement unit of the vehicle.

Incorporating IMUs within the HMD and the vehicle allows for accurate tracking of both the vehicle's and the passenger's movements. By comparing these data sets, the system can finely tune the AR display to reflect the relative movement, further reinforcing the natural alignment of visual and vestibular cues.

In an example, the above method further comprises adjusting the streaming of the images based on an event.

Adjusting the streaming of images based on detected external events ensures that the AR display is dynamically responsive to the driving environment. This adaptability enhances the passenger's situational awareness and contributes to a coherent visual experience that aligns with real-world movements and events.

In an example, adjusting the streaming comprises adjusting at least one of a transparency level of the streamed images, a field of view of the streamed images and a display priority of an additional content unrelated to the external environment.

The ability to adjust transparency levels and the field of view of the streamed images allows the system to tailor the AR experience to individual passenger needs and preferences. This customization is key in providing a comfortable and personalized visual experience that effectively mitigates motion sickness.

In an example, the event is related to at least one of crossing a threshold value related to a change in an acceleration, a speed and/or a direction of the vehicle, approaching and/or passing through a predetermined geographical area such as an intersection or a reduced speed area, detecting an obstacle in a path of the vehicle and switching between different driving modes., such as from an autonomous mode to a manual mode and vice versa.

The system's ability to respond to specific types of events, such as changes in vehicle speed or direction, enhances its precision in mitigating motion sickness. By adapting to these specific conditions, the AR display maintains a high level of visual coherence with the actual vehicular motion, crucial for reducing sensory conflict.

It is further proposed a computer program comprising instructions which, when the program is executed by a computer, cause the computer to carry out the above method.

Non-transitory storage medium storing instructions of a computer program which, when executed by a computer, cause the computer to carry out the above method.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

### Brief Description of Drawings

Other features, details and advantages will be shown in the following detailed description and on the figures, on which:
Fig. 1

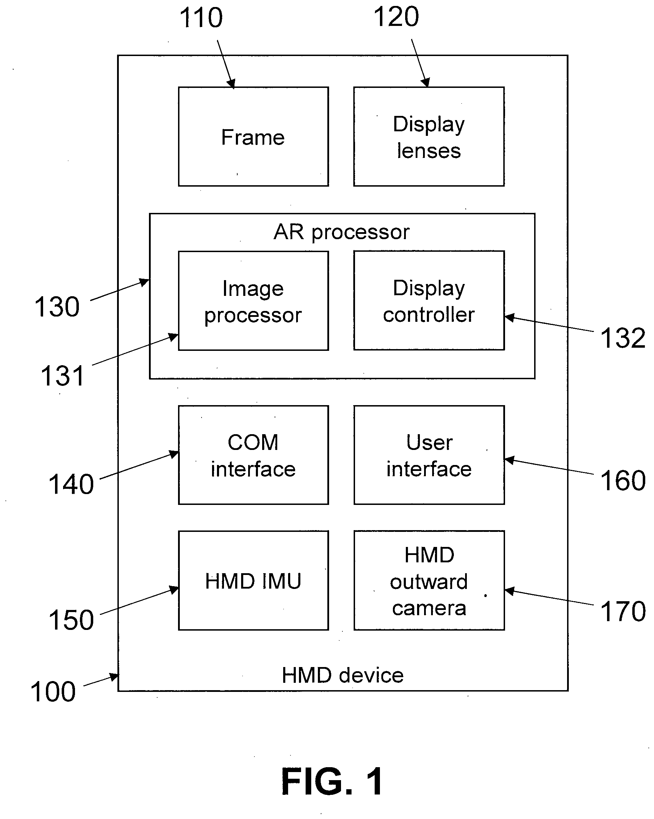

   [Fig. 1] illustrates an example of HMD device according to the proposed technique.
Fig. 2

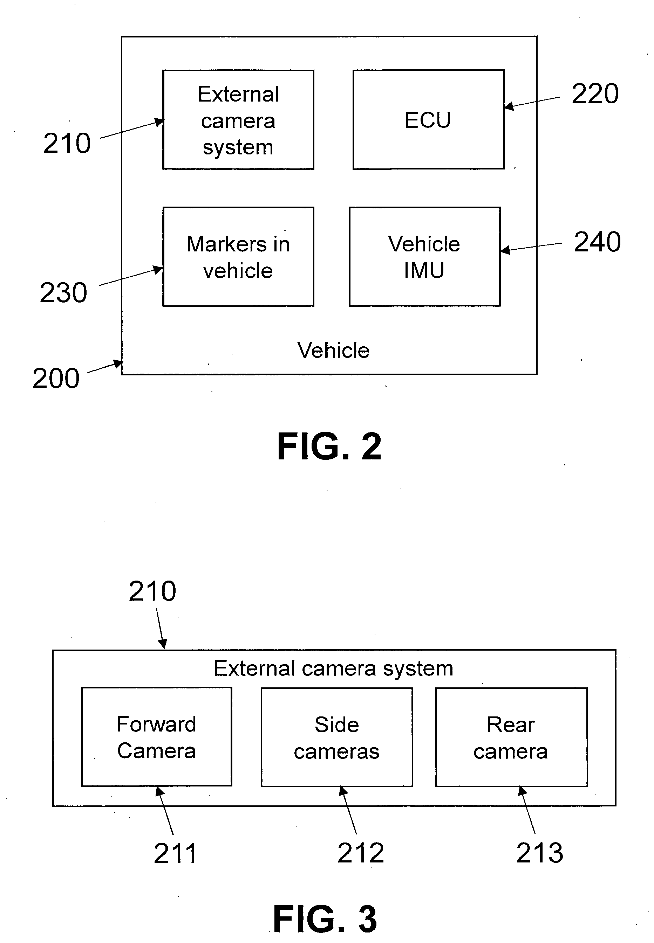

   [Fig. 2] illustrates an example of vehicle equipped according to the proposed technique.
Fig. 3
   [Fig. 3] depicts an example of external camera system of the vehicle of Fig. 2.
Fig. 4

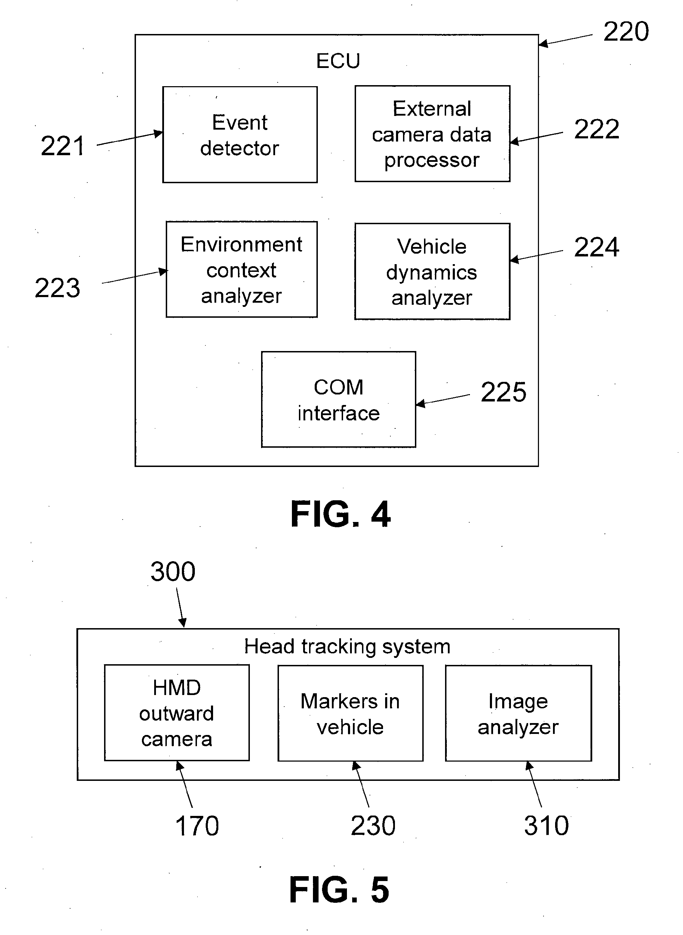

   [Fig. 4] depicts an example of electronic control unit of the vehicle of Fig. 2.
Fig. 5
   [Fig. 5] depicts an example of head movement tracking system according to the proposed technique.
Fig. 6

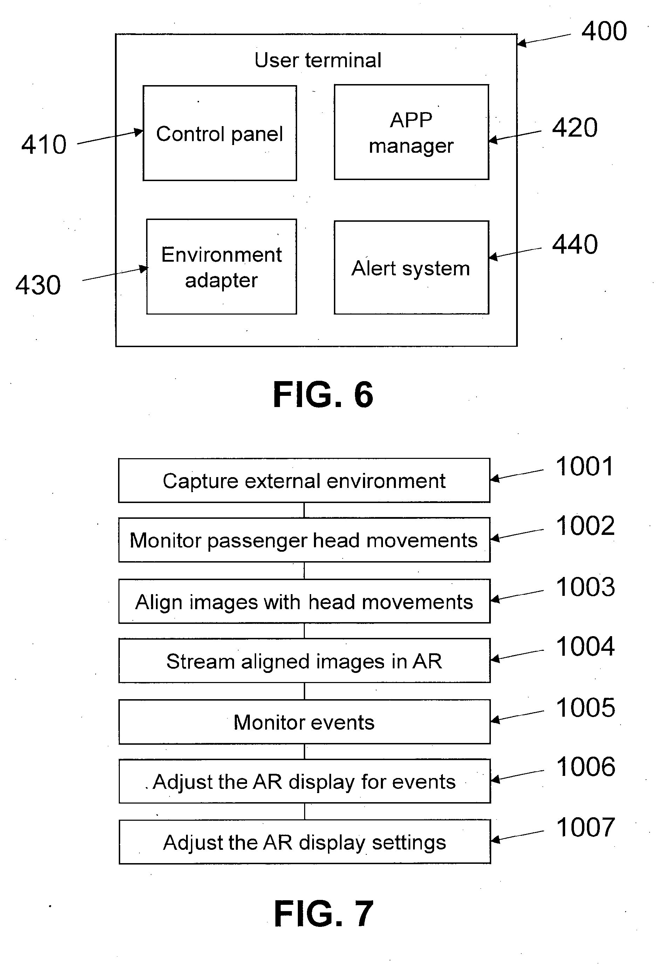

   [Fig. 6] illustrates an example of user terminal according to the proposed technique.
**Fig. 7-10**

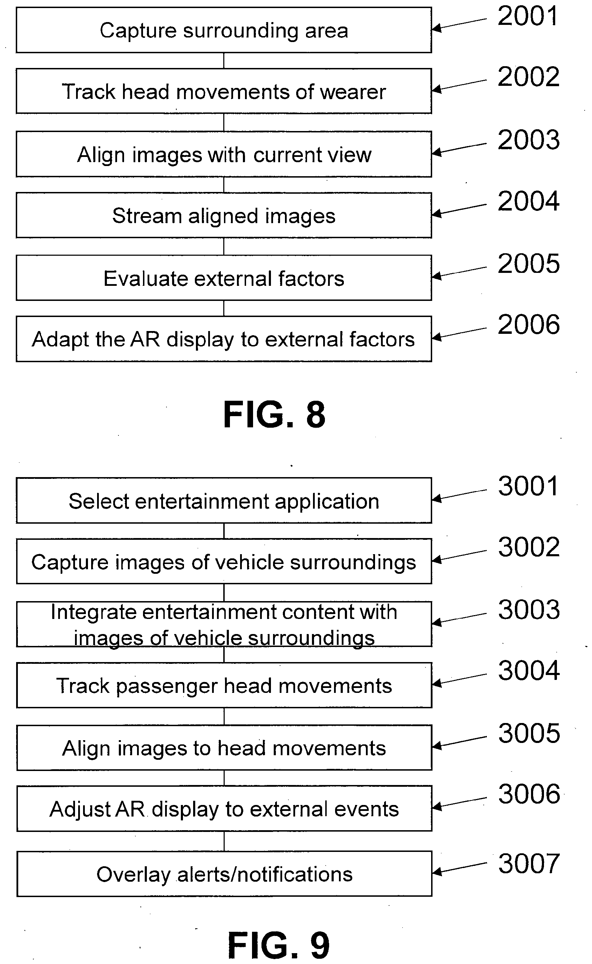

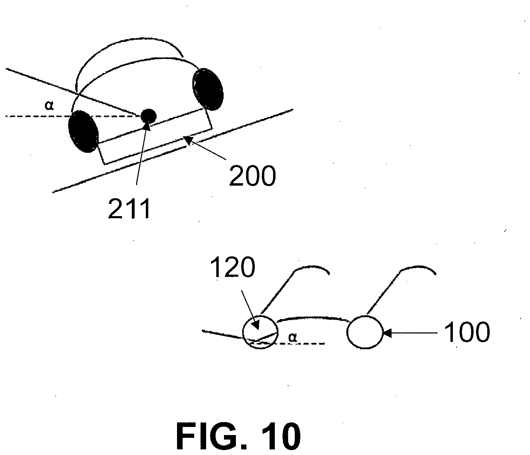

   [Fig. 7], [Fig. 8], [Fig. 9] and [Fig. 10] depict four examples of use cases according to the proposed technique.

### Description of Embodiments

The proposed technique relates to an augmented reality display method and system for reducing or suppressing motion sickness in a vehicle passenger.

Although the present document mainly focuses on terrestrial vehicles such as cars or buses, the proposed technique applies not only to terrestrial vehicles but to any kind of vehicle, including for instance a boat or a plane.

A vehicle passenger is an occupant of a vehicle which is not actively controlling the movements of the vehicle. When a vehicle circulates autonomously, all occupants of the vehicle are interpreted as passengers in the context of the present document.

This reduction or suppression of motion sickness can be achieved by obtaining real-time external environmental images of the vehicle, tracking head .movements of a passenger of the vehicle; and streaming the real-time external environmental images to a head-mounted display (HMD) device worn by the passenger, wherein the streaming is adaptively aligned with the tracked head movements to maintain visual coherence with a perspective of the passenger.

An appropriate augmented reality display system can comprise a HMD device, a head movement tracking system configured to track the head movements of a passenger wearing the HMD device, an environmental imaging system configured to obtain real-time external environmental images of the vehicle; a streaming system for streaming the real-time external environmental images to the HMD device, and an alignment module configured to adaptively align the streaming with the tracked head movements to maintain visual coherence with a perspective of the passenger.

By streaming real-time external environmental images to the HMD device worn by the passenger, the streaming system may further anticipate and present upcoming events, such as obstacles, turns, or signage, thus offering the passenger information akin to that available to a driver. This proactive approach in conveying real-time environmental data further contributes to minimizing motion sickness, leveraging the phenomenon that drivers, who have access to direct, anticipatory visual cues, are typically less susceptible to motion sickness.

It is now referred to Figure 1, which depicts an example of a suitable head mounted display (HMD) device 100 according to the proposed technique.

The HMD device 100 comprises a frame 110, display lenses 120 and a communication (COM) interface 140.

The frame 110 serves as the structural backbone, housing all other components. The display lenses 120 are integrated optics that provide augmented reality images to the wearer. The communication interface 140, which may be wired or wireless, enables data communication with external devices or systems, like the vehicle. Wireless communication in particular, using any current or future communication technologies like for instance WiFi, 5G or 6G achieves streaming with delays which order of magnitude is 10 ms or less. Such delays are imperceptible to human eye and brain.

The HMD device comprises a streaming system 130 configured to control the display lenses 120. The streaming system 130 may comprise an augmented reality (AR) processor which is a .processing unit configured for generating augmented reality experiences. The AR processor may comprise an image processor 131 to process external image data for display on the lenses and a display controller 132 to manage display parameters, such as transparency and field of view. The streaming system 130 may be integrated in the HMD device or in an external device, such as a user terminal, operably connected to the communication interface 140 of the HMD device. For instance, in some scenarios, the electronic control unit of the vehicle, as further discussed below, may be tasked with all or part of the functions of such a streaming system.

The HMD device may further comprise a variety of sensors, such as an inertial measurement unit (IMU) 150 to track the wearer's head movements relative to the external world, an outward camera 170 to capture a view from the perspective of the wearer of the HMD device, an eye tracker to track eye movements of the wearer, a microphone to capture for instance vocal instructions, etc.

The HMD device may further comprise a user interface 160, for instance in the form of one or more buttons or sliders arranged on the frame, to allows the wearer to interact with and control settings of the HMD.

Figure 2 shows an example of a vehicle 200 suitable for the proposed technique. The vehicle includes an external camera system 210 as an example of an environmental imaging system. The vehicle further includes an electronic control unit (ECU) 220.

The vehicle may further comprise markers 230, arranged in the interior of the vehicle, to serve as reference points for the outward camera 170 of the HMD to track head movement. Alternatively or in addition, the vehicle itself may comprise a camera system 170 integrated into the interior of the vehicle and configured to acquire images showing the passenger wearing the HMD device and one or more of the markers 230.

The vehicle may further comprise a vehicular movement tracker, for instance an inertial measurement unit (IMU) 240 which serves to track the vehicle's movements and orientation relative to the external world.

The external camera system 210 is configured to capture external environmental images around the vehicle. Figure 3 shows an example of external camera system 210, which comprises a forward-facing camera 211, side cameras 212 and a rear camera 213. The relative arrangement and fields of view of the cameras 211, 212, 213 ideally allow providing a 360-degree view around the vehicle.

The ECU 220 is a central system of the vehicle. It is configured to process data from the cameras and optionally from other sensors or systems of the vehicle. Figure 4 shows an example of ECU 220 which comprises an event detector 221, an external camera data processor 222, an environmental context analyzer 223, a vehicle dynamics analyzer 224, and a communication interface 225.

The communication (COM) interface 225 is configured to facilitate diverse types of data transmission between the ECU 220 and other components, such as the HMD device 100 and the external camera system 210. This may include for instance transmitting processed image data and sensor readings from the vehicle to the HMD device, sending real-time vehicle dynamics data to the HMD for synchronizing the AR display with vehicle movement, receiving requests or instructions from the HMD, such as requests for specific camera views or sensor data, facilitating bidirectional communication, allowing for adaptive responses based on user interactions or environmental changes, etc.

The external camera data processor 222 may be responsible for various levels of image processing such as converting raw camera feeds into a format suitable for AR overlay, performing image enhancement like contrast adjustment or stabilization for improved AR clarity, segmenting and prioritizing certain visual data based on context, such as highlighting road signs or obstacles, etc.

The AR display system can be tailored to various operational requirements, balancing processing loads between the vehicle's ECU and the HMD device. This modular approach allows for customization based on specific use cases, user preferences, and design considerations. In configurations where the HMD lacks an image processor 131 or a display controller 132, the external camera data processor 222 may be tasked with the full responsibility for preparing image data for AR display. This can be advantageous in minimizing the processing load on the HMD, leading to potentially lighter and less complex HMD designs.

Conversely, in configurations where the ECU 220 is devoid of an external camera data processor 222, the streaming system 130 of the HMD may be configured to receive the raw camera feeds captured by the external camera system 210 and to process these feeds to prepare image data suitable for AR display. This can be advantageous in allowing compatibility of the HMD even with vehicles that did not originally comprise an environmental imaging system and that were equipped, post-manufacturing, with the external camera system 210.

The event detector 221 is configured to identify external events that may affect the vehicle. For instance, external events may include traffic incidents, environmental hazards like roadblocks or changes in weather conditions.

The data detected by the event detector 221 may be communicated to the external camera data processor 222 and/or to the streaming system 130 for real-time adjustments in the AR content, ensuring an up-to-date and contextually relevant AR experience. For instance, traffic incidents or environmental hazards appearing in the images captured by the external camera system may be highlighted in the AR display. Changes in weather conditions may prompt adjustments in the AR overlay for visibility.

The environmental context analyzer 223 may be configured to assess a range of external environmental factors, such as analyzing data like ambient light or weather conditions to adjust the brightness and contrast of the AR display accordingly, or interpreting traffic density or pedestrian movement to enhance AR cues for navigation and safety. This contextual analysis can be transmitted to the external camera data processor 222 and/or to the streaming system 130 (and/or more specifically to the display controller 132), allowing the AR display to adaptively respond to the current driving environment.

The vehicle dynamics analyzer 224 is configured to analyze data related to vehicle movement, such as data related to vehicle speed, direction, and orientation, including for instance data measured by sensors such as an odometer and/or driver inputs such as a brake press or a steering action. The analyzed data can be utilized by the external camera data processor 222 and/or the streaming system 130 to synchronize the AR display with real-time vehicle dynamics and thusly maintain a consistent and accurate AR representation of the external environment relative to the vehicle's motion.

Figure 5 shows an example of a head movement tracking system 300 which includes the HMD outward camera 170 and an image analyzer 310, which work together to track the wearer's head position using markers 230 inside the vehicle.

Another example of head movement tracking system 300 may be configured to comprise the vehicular IMU 240, the HMD IMU 150 and an IMU data processor (not represented). Both IMUs tracks 'absolute' movements and orientation of a respective entity (the wearer's head in the case of the HMD IMU 150, the vehicle in the case of the vehicular IMU 240) in relation to the same external world reference. By analyzing these two sets of 'absolute' data, the IMU data processor can effectively compute and output data that represents the relative position and orientation of the wearer's head in relation to the vehicle, thus enabling precise tracking for augmented reality applications.

The head movement tracking system 300 may be a standalone device or may be integrated in any appropriate device or system, e.g. in the HMD device 100 or in the vehicle 200.

The proposed technique relies on an alignment module which ensures that the streaming of external environmental images to the HMD device is synchronized with the head movements of the wearer. This module contributes to maintaining visual coherence and enhancing the AR experience, particularly for motion sickness reduction or suppression in vehicle passengers.

The alignment module may receive data from multiple sources, including for instance head movement data from the HMD IMU 150, providing details about the wearer's head position and orientation, vehicle movement data from the vehicular IMU 240, giving information about the vehicle's motion and/or real-time external environmental images from the external camera system 210.

Upon receiving this data, the alignment module may perform several functions, including for instance comparing and calculating the relative positioning between the wearer's head and the vehicle's movements, adjusting the AR display in real-time to align the external images with the wearer's perspective, considering the current position and movement of both the wearer and the vehicle and/or ensuring that changes in the vehicle's direction or speed are correspondingly reflected in the AR display to maintain a consistent and coherent visual experience.

The outputs of the alignment module may include, for instance, an adaptively aligned AR imagery that is streamed to the display lenses 120 of the HMD device 100 and/or adjustments in display parameters like the field of view and transparency, as controlled by the display controller 132.

The alignment module may be an integrated function of the AR processor 130 within the HMD device 100, leveraging its computational power to process the complex data required for alignment. Alternatively, this module may be a part of the ECU 220, particularly utilizing the capabilities of the external camera data processor 222 for image alignment tasks. This setup can be advantageous in vehicles with more powerful onboard processing capabilities. In scenarios where the HMD device lacks certain components, such as the image processor 131 or the display controller 132, the external camera data processor 222 in the ECU 220 may assume at least part, and optionally the full role of the alignment module.

Figure 6 illustrates an example of user terminal 400. The user terminal may be part of the HMD device 100 or of the vehicle 200 or be a standalone device such as a smartphone or a tablet operably connected at least to the HMD device 100 and optionally also to the ECU 220. The user terminal may comprise one or more of the following: a control panel 410, an application (APP) manager 420, an environment adapter 430 and an alert system 440. The user terminal may be tasked with one or more functions of the HMD device, for instance functions of the AR processor 130 or more specifically of the image processor 131 and/or of the display controller 132 and/or functions of the user interface 160. Alternatively, said functions may be performed jointly by the HMD device and the user terminal.

The control panel 410 is a human-machine interface allowing the user to personalize their AR experience. It can include options for adjusting display settings, selecting specific AR applications, or customizing alerts and notifications. The control panel 410 may work in conjunction with the streaming system 130 in the HMD device 100 to implement user preferences in real-time.

The APP manager 420 manages the various applications running on the HMD. It ensures that applications like navigation aids, entertainment, or informational services do not interfere with the core function of the AR display. The APP manager 420 may collaborate with the Alignment Module to ensure that application content is appropriately integrated with real-time environmental imagery.

The alert system 440 is responsible for generating safety alerts and warnings for the wearer. It may utilizes data from the event detector 221, the environmental context analyzer 223 and/or the vehicle dynamics analyzer 224 to provide timely and relevant safety information. This system ensures that alerts are displayed prominently on the AR display without overwhelming the wearer, maintaining a balance between awareness and information overload.

The environment adapter 430 adjusts the AR display based on environmental factors. This module may interpret data related to the external environment, like lighting conditions or weather changes, and adapt the AR display for optimal visibility and relevance. It may work closely with the streaming system 130 and the alignment module to ensure that environmental adaptations are smoothly integrated into the AR experience.

Specific exemplary use cases are now detailed.

The following exemplary use case, illustrated by Figure 7, relates to highway driving in an autonomous vehicle. A passenger is using the HMD Device 100 while riding in an autonomous vehicle on a highway. The journey includes various changes in terrain, such as hills and curves.

As the vehicle travels, the external camera system 210 on the vehicle, particularly the forward-facing camera 211 and the side cameras 212, continuously captures 1001 the external environment. These cameras provide a comprehensive view of the road ahead, the sides, and the rear of the vehicle.

Inside the vehicle, the passenger's head movements are monitored 1002 by the head movement tracking system 300. Accurate tracking, assisted by the markers 230 and the HMD outward camera 170, is critical for aligning the AR display with the passenger's natural gaze and head orientation. This alignment is essential to mitigate motion sickness by ensuring the visual input matches the passenger's expectations as they look around, reducing the sensory mismatch often responsible for motion sickness.

The streaming system 130 receives and processes environmental images, aligning 1003 them with the tracked head movements and the aligned images are then streamed 1004 by the display lenses 120. This adaptive alignment, achieved through the image processor 131, ensures the AR experience matches the passenger's perspective, providing a stable and coherent visual field as the terrain changes. This coherence minimizes the effects of motion sickness by maintaining a consistent visual reference aligned with the passenger's perception of movement.

The ECU 220, through its event detection module 221 and environmental context analyzer 223, monitors 1005 external events such as changes in the road terrain or vehicle maneuvers like turns or lane changes. Based on this information, the display controller 132 on the HMD adjusts 1006 the AR display. For example, during a sharp turn, the display might adjust the field of view to ensure the passenger's visual experience remains stable and coherent with the vehicle's movements.

Throughout this process, the communication interface 140 in the HMD maintains a constant stream of data exchange with the vehicle's communication interface 225. This synchronization ensures real-time adaptation and responsiveness of the HMD's AR display to the changes in the vehicle's external environment and the passenger's head movements.

The passenger, through the user interface 160 on the HMD, has the option to make 1007 manual adjustments to the AR display settings, such as changing the level of transparency or selecting specific data to be overlaid on the real-time images, further enhancing their experience.

The following exemplary use case, illustrated by Figure 8, relates to urban driving with limited visibility. A passenger in a vehicle is navigating through a densely built urban area. The high buildings and narrow streets limit visibility and create a complex driving environment.

As the vehicle maneuvers through the urban landscape, the external camera system 210, including the forward-facing camera 211, side cameras 212, and rear camera 213, captures 2001 detailed images of the surrounding area. These cameras allow providing a 360-degree view around the vehicle, capturing every angle despite the limited visibility caused by the urban setting.

Simultaneously, the head movement tracking system 300 processes combined data from IMUs of the HMD and of the vehicle to track 2002 the head movements of the wearer of the HMD device within the vehicle. This head movement tracking is crucial in urban settings with frequent starts, stops, and turns. By accurately tracking the wearer's head movements in relation to the vehicle's motions, the system reduces the discrepancy between visual input and physical sensation, a common trigger for motion sickness.

The streaming system 130 receives the urban environment images from the external camera data receiver 222. The streaming system 130 then adjusts 2003 these images to align with the passenger's current view and streams 2004 the aligned images, considering both the head movement data and the external environmental context. As the AR display adapts to the urban landscape, with frequent shifts in the field of view due to building and traffic, maintaining a stable and coherent visual reference point for the passenger becomes crucial. This stability, provided by the precise adjustments from the streaming system 130, is key to reducing sensory conflict and thus motion sickness.

The environmental context analyzer 223 constantly evaluates 2005 external factors such as traffic density, street layout, and pedestrian activity. The environmental adaptation module 430 then adapts 2006 the AR display in response to these factors. This could include highlighting pedestrian crossings, indicating the direction of oncoming traffic, or enhancing the visibility of street signs on the HMD display.

The alert system 440, in response to the data from the environmental context analyzer 223 and event detection module 221, may further provide real-time safety alerts and warnings to the passenger through the HMD. These alerts might include notifications about nearby vehicles, potential hazards like roadworks, or sudden changes in traffic flow.

Communication between the HMD Device 100 and the vehicle is maintained via the respective communication interfaces 140 and 225. This ensures real-time data transfer and synchronization between the vehicle's external sensors and the HMD's AR display. The passenger can use the user interface 160 on the HMD to manually adjust the AR display settings or choose to focus on specific types of information, enhancing their situational awareness while traveling through the urban environment.

The application manager 420 enables the passenger to access additional applications on the HMD, such as navigation aids or entertainment options. These applications are managed 2006 to ensure they do not interfere with the primary function of the AR display in providing environmental awareness.

The following exemplary use case, illustrated by Figure 9, relates to entertainment and relaxation during travel. A passenger in a vehicle wishes to use the HMD Device 100 for entertainment, such as watching a movie, while still being aware of the travel progress and surroundings during a long journey.

The passenger selects 3001 an entertainment application, like a movie or a game, using the user interface 160. This selection is processed by the application manager 420, which prepares the content for display on the HMD.

While the passenger engages with the entertainment content, the external camera system 210 captures 3002 real-time images of the vehicle's surroundings. This ensures that the system remains aware of the external environment even while the passenger is occupied with entertainment.

The streaming system 130, and specifically the image processor 131, seamlessly integrates 3003 the entertainment content with the real-time environmental images. The display controller 132 adjusts the transparency and/or the field of view of the entertainment content. Integrating entertainment with real-time environmental images is a delicate balance with respect to motion sickness reduction. The streaming system 130 ensures that the entertainment content does not overwhelm the passenger's field of view, maintaining a reference to the actual motion of the vehicle. This balance helps the passenger's brain reconcile any discrepancies between visual stimuli and physical motion, reducing the likelihood of motion sickness.

Throughout this process, the head tracking system 300 tracks 3004 the passenger's head movements and the streaming system dynamically adjusts 3005 the display on the HMD accordingly, to ensure that both the real-time environmental images and the entertainment content align with the passenger's perspective, offering an immersive yet safe experience.

In response to external events detected by the event detection module 221 and environmental context analyzer 223, the environmental adaptation module 430 dynamically adjusts 3006 the display on the HMD. For instance, if the vehicle approaches a sharp turn or encounters heavy traffic, the system may temporarily minimize or adjust the transparency of the entertainment content to draw the passenger's attention to the external environment.

The alert system 440 provides real-time safety notifications and/or alerts based on the vehicle's sensor data. These notifications and/or alerts are overlayed 3007 onto the entertainment content on the HMD, ensuring that the passenger is promptly informed about important developments in the vehicle's surroundings.

Throughout the journey, the passenger has the option to adjust the settings of the AR display and entertainment content via the user interface 160. This customization includes modifying transparency levels, content placement, and prioritization of environmental information over entertainment content.

Reference is made to Figure 10, which illustrates a scenario in which a terrestrial vehicle is involved in a maneuver such as a sharp turn, leading to roll. This results in the vehicle being inclined at an angle α relative to the horizontal plane. The scene captured by the vehicle's front camera reflects this inclination with a similar angle α. While the driver is aware of this roll, a passenger with a restricted view might not perceive it, potentially causing motion kinesis. The scene is displayed as captured by the vehicle's front camera, replicating the angle and movement experienced by the driver. If, for instance, the passenger's head and torso remain in a vertical position, the displayed scene adapts to maintain the angle α in relation to the horizontal plane. The proposed method extends beyond just addressing roll. It is designed to mitigate various forms of sensory conflicts, including but not limited to roll, yaw, pitch, and translational movements. This is achieved irrespective of the passenger's gaze direction. These functionalities are further enhanced by side cameras and real-time monitoring of the passenger's head movements. Such integration allows for an on-the-fly adjustment of the augmented reality view, presenting a comprehensive and dynamic representation of the vehicle's surroundings, thereby effectively reducing sensory discrepancies for the passenger.

## Claims

1. A method for reducing or suppressing motion sickness in a vehicle passenger, the method comprising:
obtaining (1001, 2001, 3002) real-time external environmental images of the vehicle (200);
tracking (1002, 2002, 3004) head movements of a passenger of the vehicle; and
streaming (1004, 2004, 3003) the real-time external environmental images to a head-mounted display device (100) worn by the passenger, wherein the streaming is adaptively aligned (1003, 2003, 3005) with the tracked head movements to maintain visual coherence with a perspective of the passenger.

2. The method of claim 1, wherein obtaining the real-time external environmental images includes capturing (1001, 2001, 3002) said images using a plurality of cameras (211, 212, 213) mounted on an exterior of the vehicle.

3. The method of claim 1 or 2, wherein tracking the head movements comprises identifying markers (230) placed within an interior of the vehicle and captured by a camera system (170) integrated into the HMD device and/or the interior of the vehicle.

4. The method of any one of claims 1 to 3, wherein tracking the head movements comprises utilizing an inertial measurement unit (150) within the HMD device and/or an inertial measurement unit (240) of the vehicle.

5. The method of any one of claims 1 to 4, further comprising adjusting (1006, 2006, 3006) the streaming of the images based on an event.

6. The method of claim 5, wherein adjusting the streaming comprises adjusting at least one of a transparency level of the streamed images, a field of view of the streamed images and a display priority of an additional content unrelated to the external environment.

7. The method of claim 5 or 6, wherein the event is related to at least one of crossing a threshold value related to a change in a speed and/or a direction of the vehicle, approaching and/or passing through a predetermined geographical area, detecting an obstacle in a path of the vehicle and switching between different driving modes.

8. An augmented reality display system for reducing or suppressing motion sickness in a passenger of a vehicle (200), the augmented reality display system comprising:
a head-mounted display device (100);
a head movement tracking system (300) configured to track the head movements of a passenger wearing the HMD device;
an environmental imaging system (210) configured to obtain real-time external environmental images of the vehicle (200);
a streaming system (130, 220) for streaming the real-time external environmental images to the HMD device; and
an alignment module configured to adaptively align the streaming with the tracked head movements to maintain visual coherence with a perspective of the passenger.

9. Non-transitory storage medium storing instructions of a computer program which, when executed by a computer, cause the computer to carry out the method of any one of claims 1 to 7.
